# EUROPÄISCHE PATENTANMELDUNG

(11) **EP 1 191 799 A1**
(43) Veröffentlichungstag der Anmeldung: **27.03.2002**
(21) Anmeldenummer: 01119826.4
(22) Anmeldetag: 16.08.2001
(51) Int. Cl.: H04Q 7/22

(54) **Verfahren und Vorrichtung zur Funkübertragung von den Inhalt einer Fernsehsendung repräsentierenden Daten von einem Sender an ein Mobilfunkendgerät**

(30) Priorität: 26.09.2000 DE 10047608; 25.01.2001 DE 10103291
(71) Anmelder: SIEMENS AKTIENGESELLSCHAFT, 80333 München (DE)
(72) Erfinder: Baese, Gero, 81371 München (DE); Fischer, Andre, 10965 Berlin (DE); Gebler, Martin, 82049 Pulach im Isartal (DE); Moritz, Peter, 85540 Haar (DE); Markgraf, Sabine, 82131 Gauting (DE); Prange, Stefan, Dr., 81476 München (DE); Schlossnikel, Annette, 81245 München (DE); Sibila, Arnd, 82272 Moorenweis (DE); Strobel, Thomas, 82131 Gauting (DE); Von Brockdorff, Christian, 82057 Icking (DE); Wilde, Jürgen, 82024 Taufkirchen (DE)

(57) **Zusammenfassung**

Die Erfindung betrifft Verfahren und Vorrichtungen zur Funkübertragung von den Inhalt einer Fernsehsendung repräsentierenden Daten von einem Sender an ein Mobilfunkendgerät.

Die Erfindung offenbart Vorrichtungen und Verfahren zur Funkübertragung von den Inhalt einer Fernsehsendung repräsentierenden Daten von einem Fernsehsender an ein Mobilfunkendgerät 10 eines Endgerätnutzers 9, wobei die Daten die Sendung beispielsweise durch Text repräsentierende Informationen umfassen.

## Beschreibung

Die Erfindung betrifft Verfahren und Vorrichtungen zur Funk-übertragung von den Inhalt einer Fernsehsendung repräsentierenden Daten von einem Sender an ein Mobilfunkendgerät.

Fernsehen ist ein von breiten Bevölkerungsschichten intensiv genutztes, weit verbreitetes Medium. Ein Nutzungsschwerpunkt des Mediums Fernsehen sind insbesondere Serien, wie sog. Soap-operas und Sportsendungen. Für den regelmäßigen Nutzer des Mediums Fernsehen ist es von großer Bedeutung, regelmäßig konsumierte Sendungen nicht zu versäumen. Zur Lösung dieses Problems sind tragbare Fernsehgeräte und Radiogeräte bekannt. Jedoch sind die Empfangsbedingungen hier bei mobiler Anwendung teilweise unzureichend; im übrigen ist die Portabilität der gemäß dieser Lösung empfangsseitig verwendeten mobilen Geräte suboptimal. Weiterhin ermöglicht der Stand der Technik die Aufnahme relevanter Sendungen durch den Benutzer auf Video, was jedoch den Nachteil in sich birgt, dass eine zeitliche Verzögerung der Wahrnehmung der Sendung, verglichen zum Ausstrahlungszeitpunkt erfolgt, was insbesondere bei Sportereignissen für die Benutzerzielgruppe nicht akzeptabel ist.

Aufgabe der vorliegenden Erfindung ist deshalb, einem Nutzer möglichst einfach; und effizient und unter Vermeidung von Zeitverzögerungen zur Ausstrahlung ergonomisch den mobilen Empfang von ausgestrahlten Sendungen, insbesondere Serien, zu ermöglichen. Die Aufgabe wird durch die Gegenstände der unabhängigen Ansprüche gelöst.

Die erfindungsgemäße Übertragung von den Inhalt der zu empfangenden Sendung, insbesondere Serie, betreffenden Textinformationen über ein Mobilfunkendgerät des Endgerätnutzers erlaubt eine ergonomische portable Lösung des Problems. Mobilfunkendgeräte sind wesentlich einfacher portierbar als mobile Fernsehgeräte, und es erfolgt nicht wie bei einer Video-Aufzeichnung eine Verzögerung der Informationen der Endgerätnutzer. Hierfür werden den Inhalt der Sendung repräsentierende Textinformationen von einer fernsehsenderseitigen Einrichtung über ein Mobilfunknetz an ein Mobilfunkendgerät eines Endgerätnutzers übermittelt. Die übermittelten Daten können insbesondere nur Text enthalten, was eine einfache und kostengünstige Übermittlung an ein Mobilfunkendgerät ermöglicht, wobei der übertragene Inhalt z.B. dem eines per Radio kommentierten Fußballspieles entsprechen kann.
Vorteilhaft ist insbesondere eine Speicherung von Vorauswahl-informationen betreffend an einen Endgerätnutzer zu übertragende Sendungen.
Die Kosten für die Übertragung werden vorzugsweise unter Berücksichtigung von einem Mobilfunkendgerätnutzer im Mobilfunknetz identifizierenden Daten diesem zugeordnet. Sie können beispielsweise vom Guthaben einer Telefonkarte abgezogen oder über die Telefonrechnung des Endgerätnutzers eingezogen werden.

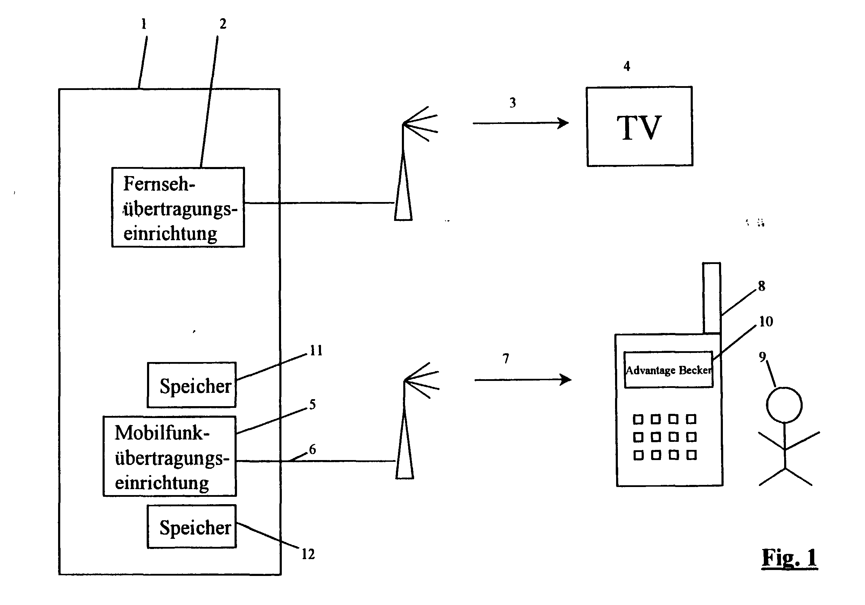

Weitere Merkmale und Vorteile der Erfindung ergeben sich aus den Ansprüchen und der nachfolgenden Beschreibung eines Ausführungsbeispieles anhand der Zeichnung. Dabei zeigt als einzige Figur
- Figur 1: als Blockschaltbild eine erfindungsgemäße Übertragung an ein Mobilfunkendgerät.
Figur 1 zeigt schematisch eine Fernsehanstalt 1, welche mit einer Fernsehübertragungseinrichtung 2 in herkömlicher Weise eine Fernsehsendung per Funk (3) an ein Fernsehendgerät 4 zur Darstellung von Fernsehbildern in herkömlicher Form aussendet.
Erfindungsgemäß ist auch eine Vorrichtung 5 vorgesehen, in welcher Ferngespräche (beispielsweise von einem Redakteur online zur übertragenden Sendung (bei Sportübertragungen) oder davor (bei Serien) eingegebene) kurze Informationen zur Sendung gespeichert sind. Die Informationen (insbesondere Text) werden über ein an sich bekanntes Mobilfunknetz 6, 7 an ein Mobilfunkendgerät 8 eines Benutzers 9 übertragen. Die übertragenen Informationen können insbesondere alphanumerische Informationen sein, welche in einem Display 10 des Endgerätes z.B.entweder online durchlaufend angezeigt werden oder beispielsweise im Endgerät 8 gespeichert und nach Tastendruck etc. vom Endgerätnutzer 9 abgerufen werden.
Die Erfindung ist für unterschiedlichste Endgeräte, beispielsweise GSM, UMTS oder beliebige Multimedia Endgeräte einsetzbar, Die an das Mobilfunkendgerät übertragenen Daten können beispielsweise ein kommentiertes Hörspiel oder Text oder gesprochene/alphanumerisch übertragene Kommentare eines Sportreporters zu einer Life-Veranstaltung (Fußballspiele etc.) umfassen. Mobilfunkendgeräteseitig kann die Darstellung durch Text und/oder Grafik und/oder Sprache erfolgen. Zu einer Fernsehserie übertragene Daten können beispielsweise ein Drehbuch zum Mitlesen, oder Video-Text-Untertitel oder Ergebnisse eines Spieles (beispielsweise Fußballspieles) umfassen. Zur Serien kann auch eine Übertragung als Fotoroman mit Bildern und Sprechblasen zur Angabe von Dialogen oder mit Tonausgabe bei Endgeräten mit entsprechender grafischer/akkustischer Darstellungsmöglichkeit erfolgen. Kommentare zu einem Fußballspiel können als Text oder Ton erfolgen. Sie können auch eine Videoeinspielung von Torchancen eines Fußballspieles auf Endgerät mit entsprechenden Video-Darstellungsmöglichkeiten erfolgen. Erfindungsgemäß kann eine geeignete Aufbereitung eines Inhaltes (Content) entweder vor einer Sendung bei einer Serie oder parallel hierzu (bei live-Veranstaltungen) erfolgen. Das Verfahren kann auch auf Weiterbildungssendungen, Vorlesungen, Nachrichtensendungen etc. angewandt werden.
Für einen bestimmten Endgerätbenutzer oder ein Endgerät kann seitens eines Fernsehsenders 1,5 gespeichert sein, welche Informationen (beispielweise Serien) ihm zu übertragen sind. Für Serien kann beispielsweise eine Abrechnung über ein Abonnement (beispielsweise 2 DM/pro Monat oder 1 DM pro Übertragung) vorgesehen sein. Eine Erinnerung an einen Sendebeginn kann beispielsweise per Kurznachricht (SMS) oder sonstiger Textnachricht erfolgen. Dabei kann beispielsweise vom Endgerätnutzer 9 abgefragt werden, ob er auf dem Mobilfunkendgerät 8 die Sendung mitverfolgen will. Falls eine positive Eingabe ("ja" etc.) im Endgerät festgestellt wird, wird vom Endgerät (per Mobilfunk etc.) eine Einrichtung 5 seitens des Senders informiert und von dort eine Übertragung gestartet. Die Identifikation des Benutzers 9 kann beispielsweise anhand seines Endgerätes 8 erfolgen. Dabei kann auch festgestellt werden, dass ein Nutzer beispielsweise ein Endgerät, einen Windows - TE - basierten Organizer, ein GPS-Modem/oder ein Headset besitzt. Er bekommt die Informationen dann in für sein Endgerät geeigneter Form übermittelt. Beispielsweise kann er Informationen zu einer Fernsehserie in Form von Fotos bekommen, die in einem Screening-Verfahren übermittelt werden, zu welchem der Originalton der Fernsehserie etc. auf seinem Endgerät übermittelt wird. Die Kosten für eine Übertragung können beispielsweise über die Telefonrechnung eines Benutzers oder durch Abbuchung eines Betrages von einer prepaid-Karte oder durch Abbuchung von einem Konto in anderer Weise erfolgen.

## Patentansprüche

1. Verfahren zur Funk-Übertragung (6,7) von den Inhalt einer Fernsehsendung (6,7) repräsentierenden Daten von einem Sender (1,5) an ein Mobilfunkendgerät (8) eines Endgerätnutzers (9), wobei die Daten die Sendung repräsentierende Informationen umfassen.

2. Verfahren nach Anspruch 1, **dadurch gekennzeichnet, dass** die Daten die Sendung durch Text wiedergeben, insbesondere nur durch Text wiedergeben.

3. Verfahren nach Anspruch 1 oder 2, **dadurch gekennzeichnet, dass** die Daten die Sendung repräsentierende Bilddaten umfassen.

4. Verfahren an einem der vorhergehenden Ansprüche **dadurch gekennzeichnet, dass** seitens eines Fernsehsenders (1) gespeicherte Vorauswahl-Informationen repräsentieren, zu welchen Fernsehsendungen an einen Endgerätnutzer regelmäßig, automatisch oder nach Rückfrage die Sendung repräsentierenende Daten zu übertragen sind.

5. Verfahren an einem der vorhergehenden Ansprüche **dadurch gekennzeichnet, dass** eine Fernsehsendung repräsentierende Daten von einem Fernsehsender (1,5) an das Mobilfunkendgerät (8) des Endgerätnutzers (9) in einer an die Darstellungsmöglichkeiten des Mobilfunkendgerätes angepasster Form übermittelt werden.

6. Verfahren an einem der vorhergehenden Ansprüche **dadurch gekennzeichnet, dass** die Kosten für an ein Mobilfunk- Endgerät übertragene, eine Fernsehsendung repräsentierende Daten automatisch über eine Telefonrechnung des Endgerätnutzers (9) berechnet werden.

7. Vorrichtung, insbesondere zur Durchführung des Verfahrens an einer der vorhergehenden Ansprüche,
mit einem Speicher (11), in welchem regelmäßig an ein bestimmtes Mobilfunkendgerät (10) zu übertragende, Fernsehsendungen angegeben sind,
mit einem Speicher (12) für eine Fernsehsendung zumindest teilweise repräsentierende, an einen Endgerätnutzer zu übertragende Daten,
mit einer Einrichtung (5) zum Aussendung der Daten über ein Mobilfunknetz an ein Mobilfunkendgerät (9,10).
